# FASCICULE DE BREVET EUROPEEN

(11) **EP 0 494 557 B1**
(45) Date de publication et mention de la délivrance du brevet: **02.08.1995**
(21) Numéro de dépôt: 91403402.0
(22) Date de dépôt: 16.12.1991
(51) Int. Cl.: F16K 17/196, F16K 17/06

(54) **Appareil limiteur de pression**
Druckbegrenzungsvorrichtung
Pressure-limiting device

(30) Priorité: 31.12.1990 FR 9016537
(43) Date de publication de la demande: 15.07.1992
(73) Titulaire: Forges de Belles Ondes, F-75009 Paris (FR)
(72) Inventeur: Faubeau, Edmond, F-95580 Andilly (FR)
(74) Mandataire: Peuscet, Jacques

(56) Documents cités:
- WO-A-89/02047
- CH-A- 326 823
- US-A- 2 028 755
- US-A- 2 351 874
- US-A- 4 090 545

## Description

La présente invention concerne un appareil limiteur de pression destiné à maintenir un équilibrage de pression entre deux enceintes fermées pressurisées. Un tel appareil est monté entre les alimentations en gaz sous pression des deux enceintes.

Un tel dispositif est, en particulier, utilisé dans les systèmes de suspension des wagons de chemin de fer comportant des coussins d'air. Dans ce cas, l'appareil est monté entre les coussins d'air situés à droite et à gauche, à une même extrémité du wagon, de façon à maintenir une pression pratiquement identique dans les deux coussins. On évite ainsi tout risque de mise en dévers de la caisse du wagon par rapport aux bogies.

Il est connu d'utiliser un appareil limiteur de pression constitué par une enveloppe comportant deux tubulures d'admission reliées entre elles par deux soupapes disposées en parallèle et montées en opposition, chacune des deux tubulures étant reliée à une des deux enceintes sous pression à équilibrer ; chaque soupape comporte un clapet mobile reposant sur un siège fixe et appuyé sur ce siège par un ressort taré. Les deux soupapes sont montées en opposition de façon qu'une surpression dans une première tubulure provoque l'ouverture d'une première soupape et qu'une surpression dans la seconde tubulure provoque l'ouverture de l'autre soupape, l'ouverture de l'une ou l'autre des soupapes mettant en communication les deux tubulures et, par conséquent, assurant l'égalisation des pressions dans les deux tubulures et dans les deux enceintes sous pression auxquelles elles sont reliées. La surpression ΔP nécessaire pour provoquer l'ouverture d'une soupape est déterminée par la force opposée par le ressort appuyant le clapet mobile sur son siège fixe.

Cet appareil limite donc la pression dans un coussin par rapport à celle existant dans l'autre coussin d'air. Cette limitation permet de limiter la mise en dévers du wagon dans l'hypothèse d'un incident de fonctionnement au cours duquel la valve de nivellement qui alimente un coussin d'air continue d'alimenter ledit coussin alors que son échappement est obturé, et où, par conséquent, la pression augmenterait au-delà du nécessaire pour assurer l'équilibre. La pression ne doit donc pas dépasser celle de l'autre coussin d'une valeur supérieure à ΔP, choisie en fonction de la forme et du poids du wagon.

Dans les appareils connus jusqu'à présent, on utilise des ressorts calibrés qui sont coûteux, car ils doivent être soigneusement sélectionnés dans une production donnée, les différents ressorts d'une même production donnée, les différents ressorts d'une même production présentant statistiquement des écarts de caractéristiques importants autour de la moyenne fixée pour la production. D'autre part, au cours du temps, la force du ressort varie par suite de la fatigue du métal, cette variation n'étant pas nécessairement la même d'un ressort à l'autre ; dans un tel cas, les forces des deux ressorts d'un même appareil limiteur deviennent différentes et les deux ressorts doivent être changés pour assurer la fiabilité du fonctionnement.

La présente invention a pour but de fournir un appareil limiteur de pression permettant d'éviter ces inconvénients en prévoyant dans l'appareil un dispositif de réglage de la force du ressort par compression de celui-ci. On a déjà proposé, selon WO 89/02047, cf. le préambule de la revendication 1 annexée, dans un appareil du type ci-dessus, un dispositif de réglage de la force du ressort par compression de celui-ci ; ce dispositif connu est interne à l'enveloppe. La présente invention a pour but de fournir un appareil limiteur de pression dans lequel il est possible, à partir de l'extérieur de l'enveloppe, d'ajuster la force du ressort au moment du montage de l'appareil limiteur de pression et/ou au cours de l'utilisation pour compenser la fatigue du métal.

La présente invention a, par conséquent, pour objet un appareil limiteur de pression constitué par une enveloppe comportant deux tubulures d'admission reliées entre elles par deux soupapes comportant chacune un clapet, qui est poussé contre un siège fixe grâce à un ressort dont une extrémité est en appui sur le clapet, les deux soupapes étant montées en parallèle et en opposition entre les deux tubulures de façon qu'une surpression dans la première tubulure provoque l'ouverture d'une première soupape et qu'une surpression dans la deuxième tubulure provoque l'ouverture de la deuxième soupape, l'ouverture de l'une ou l'autre des soupapes mettant en communication les deux tubulures, les surpressions d'ouverture des deux soupapes étant sensiblement égales, dans lequel dans chaque soupape le ressort s'appuie, par son extrémité opposée à celle qui agit sur le clapet, sur un dispositif de réglage permettant de modifier la compression dudit ressort, caractérisé par le fait que le dispositif de réglage est constitué par un bouchon d'étanchéité déplaçable en translation selon l'axe du ressort, ledit bouchon permettant, à partir de l'extérieur de l'enveloppe, de modifier la compression dudit ressort. La translation du bouchon est avantageusement obtenue par vissage dudit bouchon dans un élément de la paroi de l'enveloppe de l'appareil égalisateur de pression.

Lorsque le bouchon a atteint la position correspondant à la compression désirée du ressort, il est, de préférence, maintenu en place par un dispositif de blocage ; ledit dispositif est, de préférence, constitué par un système de fente et goupille, qui dans le cas où le bouchon est vissé, empêche toute rotation du bouchon après réglage : ce dispositif peut comporter d'une part, au moins une fente ménagée sur la bordure extérieure du bouchon et, d'autre part, une goupille d'arrêt traversant un logement pratiqué dans l'élément où est vissé le bouchon, ladite goupille étant susceptible d'être introduite, après réglage, dans une fente du bouchon pour en assurer le blocage. Selon un premier mode de réalisation, le bouchon présente plusieurs fentes coopérant avec un seul logement de goupille ménagé dans l'élément de l'enveloppe, où est vissé le bouchon : en introduisant la goupille, à travers le logement dans la fente, on bloque le bouchon. Selon un deuxième mode de réalisation, l'élément de l'enveloppe comporte plusieurs logements et le bouchon, une ou plusieurs fentes. Il est bien évident que le réglage de la compression du ressort est d'autant plus précis que le nombre de fentes et/ou de logements est plus élevé.

La description donnée ci-après, à titre illustratif et nullement limitatif, d'un mode de réalisation de l'appareil selon l'invention, ainsi que le dessin annexé permettront de mieux comprendre l'invention :
Sur ce dessin :

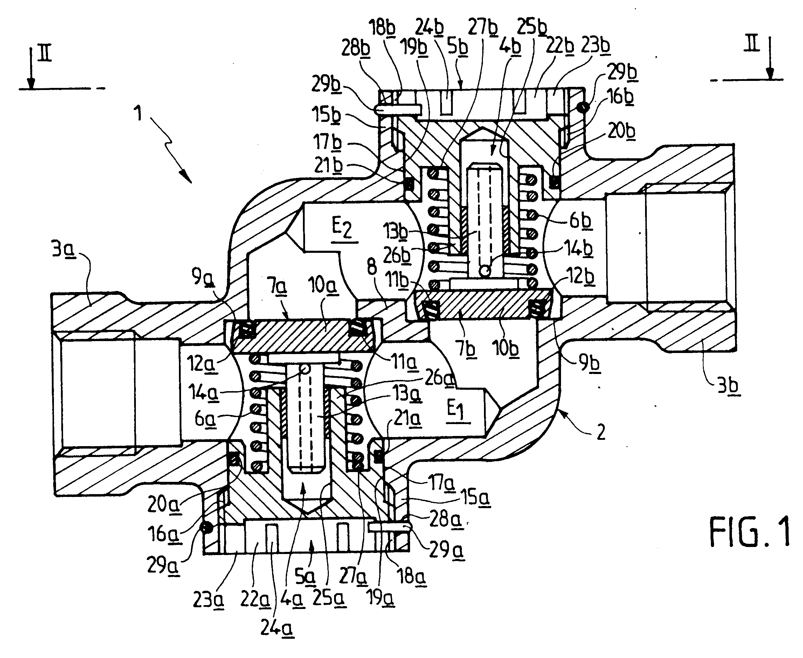

- la figure 1 est une vue en coupe longitudinale de l'appareil limiteur de pression selon l'invention ;

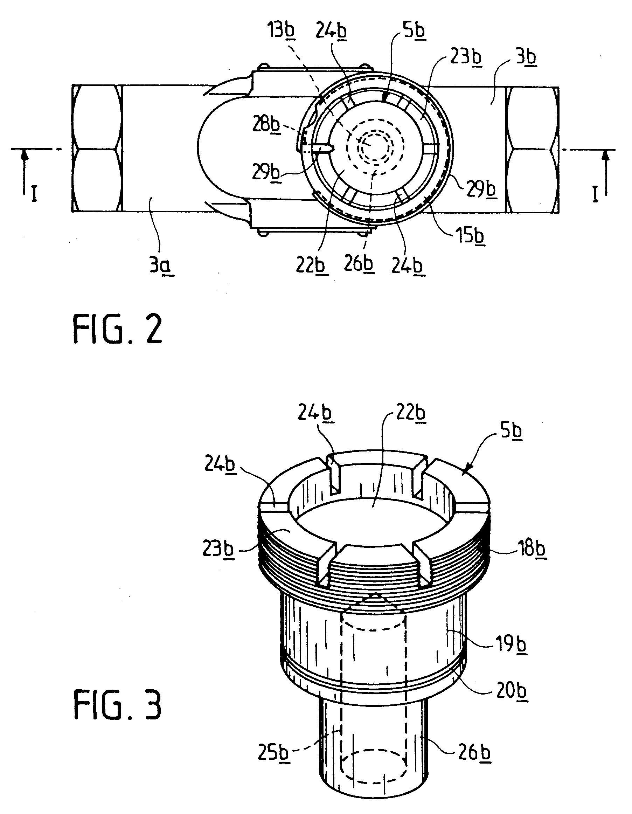

- la figure 2 est une coupe selon II - II de la figure 1 ;
- la figure 3 est une vue détaillée en perspective du bouchon de l'appareil de la figure 1.

L'appareil limiteur de pression est désigné dans son ensemble par la référence 1. Il est constitué par une enveloppe 2 portant deux tubulures d'admission 3a et 3b et deux éléments formant des saillies annulaires 15a et 15b ; les saillies annulaires 15a, 15b comportent chacune un logement radial cylindrique, 28a - 28b respectivement, dans lequel peut être insérée une goupille 29a, 29b constituée par un doigt formé en repliant radialement une extrémité libre d'un anneau élastique coupé en métal, l'anneau étant fixé dans une rainure correspondante des deux éléments formant des saillies annulaires 15a 15b. Les tubulures 3a, 3b sont destinées à recevoir de façon étanche les extrémités des canalisations d'air comprimé dont on désire égaliser les pressions. Les deux tubulures 3a et 3b ont des axes parallèles et se prolongent dans l'enveloppe 2 pour former deux espaces séparés E₁, E₂. L'enveloppe 2 contient deux soupapes 4a et 4b, qui comportent respectivement un bouchon 5a, 5b, un ressort 6a, 6b et un clapet mobile 7a, 7b. Les espaces E₁ et E₂ de l'enveloppe 2 sont séparés par une cloison 8 formant partie intégrante de la paroi de l'enveloppe 2; dans cette cloison sont ménagées deux ouvertures 9a, 9b circulaires ; le bord de ces ouvertures 9a, 9b est usiné sur une de ses faces, de façon à servir de siège aux clapets 7a et 7b respectivement. Les soupapes 4a, 4b ont leurs axes perpendiculaires au plan moyen de la cloison 8 et sont montées tète-bèche, de part et d'autre dudit plan moyen.

Dans un but de simplification la description détaillée des soupapes sera donnée ci-après en se référant à la soupape 4a, étant entendu que la soupape 4b est identique. Le clapet 7a de la soupape 4a est composé d'un disque 10a muni, sur sa face qui vient en appui sur le siège, d'une rainure annulaire 11a dans laquelle est disposé un joint torique d'étanchéité 12a. La face du disque 10a opposée au siège porte une tige de clapet 13a qui est creuse et dont le canal axial communique par une ouverture 14a avec l'espace E1 pour que la pression de la tubulure 3a soit établie dans le canal 25a où se déplace ladite tige de clapet; de la sorte, si les pressions dans les espaces E₁, et E₂ sont égales, le clapet n'est soumis à aucune force d'appui contre son siège autre que celle générée par le ressort 6a. Le ressort 6a est un ressort hélicoïdal maintenu entre le disque 10a et le bouchon 5a. Le bouchon 5a est fileté et vissé dans la saillie annulaire 15a de l'enveloppe 2. La paroi cylindrique interne de cette saillie comporte deux zones : une zone de filetage 16a dans sa partie la plus extérieure et une zone lisse 17a de plus faible diamètre dans sa partie s'ouvrant dans l'espace E₁. Le bouchon 5a a une forme extérieure généralement cylindrique de dimension et de forme telles qu'il puisse être introduit dans la saillie annulaire 15a ; sa paroi externe comporte une zone filetée 18a de plus grand diamètre susceptible de coopérer avec la zone filetée 16a de la saillie annulaire 15a et une zone lisse 19a dans laquelle est ménagée une rainure annulaire 20a contenant un joint torique d'étanchéité 21a. Dans la partie du bouchon tournée vers l'extérieur est ménagée une cavité cylindrique 22a dont la profondeur est inférieure à la hauteur de la zone filetée 18a, la cavité 22a étant bordée par une couronne 23a. Dans cette couronne 23a sont ménagées six fentes radiales 24a ayant une profondeur inférieure à la hauteur de la couronne 23a. Dans sa partie tournée vers l'espace E₁ , le bouchon est percé d'un canal axial 25a dont la paroi intérieure est prolongée par celle d'une jupe cylindrique 26a. Le canal 25a a des dimensions telles que la tige de clapet 13a puisse coulisser librement à l'intérieur ; un coussinet cylindrique disposé entre la jupe 26a et la tige 13a assure le guidage de la translation du clapet par rapport au bouchon. Une rainure circulaire 27a est ménagée dans le bouchon autour de la jupe 26a: le ressort 6a est disposé dans cette rainure 27a et entoure par conséquent la jupe 26a, qui constitue pour lui un guide axial.

L'appareil 1 limiteur de pression fonctionne de la façon décrite ci-après. S'il existe dans la tubulure 3b et, par conséquent dans l'espace E₂ , une surpression générant sur le clapet 7a une force supérieure à la force du ressort 6a de la soupape 4a, le clapet 7a est repoussé et la communication entre les espaces E₁ et E₂ est établie. Lorsque la surpression a une valeur inférieure à la force du ressort 6a, le clapet 7a revient en place contre son siège sous l'action du ressort 6a.

Le réglage du ressort 6a selon l'invention est simple. On établit dans l'espace E₂ une pression égale à la surpression pour laquelle on désire que le clapet 7a s'ouvre, l'espace E₁ étant sous pression atmosphérique et on visse le bouchon 5a jusqu'à ce que le ressort 6a atteigne la compression lui conférant une force assurant la fermeture de la soupape. On bloque alors le bouchon 5a en enfonçant le doigt de l'anneau 29a dans l'ouverture 28a de la saillie annulaire 15a et dans la fente 24a se trouvant en face ou au voisinage de cette ouverture 28a.

Dans le mode de réalisation représenté, le bouchon 5a comporte six fentes 24a et la saillie annulaire 15a une seule ouverture 28a. Il est bien évident que la saillie annulaire pourrait comporter plusieurs ouvertures, le nombre de fentes étant identique ou différent ; on peut ainsi rendre le réglage de la compression du ressort plus précis en augmentant le nombre de fentes 24a et/ou le nombre d'ouvertures 28a.

Lorsque le réglage du ressort 6a est réalisé, on procède de la même façon pour effectuer le réglage du ressort 6b et l'appareil est alors prêt à l'emploi.

## Revendications

1. Appareil (1) limiteur de pression constitué par une enveloppe (2) comportant deux tubulures (3a, 3b) d'admission reliées entre elles par deux soupapes (4a, 4b) comportant chacune un clapet (7a, 7b), qui est poussé contre un siège fixe (9a, 9b) grâce à un ressort (6a, 6b) dont une extrémité est en appui sur le clapet, les deux soupapes (4a, 4b) étant montées en parallèle et en opposition entre les tubulures de façon qu'une surpression dans la première tubulure (3b) provoque l'ouverture d'une première soupape (4a) et qu'une surpression dans la deuxième tubulure (3a) provoque l'ouverture de la deuxième soupape (4b), l'ouverture de l'une ou l'autre des soupapes mettant en communication les deux tubulures (3a, 3b), les surpressions d'ouverture des deux soupapes (4a, 4b) étant sensiblement égales, dans lequel dans chaque soupape le ressort (6a, 6b) s'appuie par son extrémité opposée à celle qui agit sur le clapet (7a, 7b), sur un dispositif (5a, 5b) de réglage permettant de modifier la compression dudit ressort (6a, 6b), caractérisé par le fait que le dispositif de réglage (5a, 5b) est constitué par un bouchon d'étanchéité déplaçable en translation selon l'axe du ressort (6a, 6b), ledit bouchon permettant, à partir de l'extérieur de l'enveloppe, de modifier la compression dudit ressort (6a, 6b).

2. Appareil selon la revendication 1, caractérisé par le fait que la translation du bouchon (5a, 5b) est obtenue par vissage du bouchon (5a, 5b) dans un élément (15a, 15b) de la paroi de l'enveloppe (2) dudit appareil (1).

3. Appareil selon l'une des revendications 1 ou 2, caractérisé par le fait que, lorsque le bouchon (5a, 5b) a atteint la position correspondant à la compression désirée du ressort (6a, 6b), un dispositif de blocage coopère avec lui pour assurer son maintien en position.

4. Appareil selon la revendication 3, caractérisé par le fait que le dispositif de blocage comporte, d'une part, au moins une fente (24a) ménagée sur la bordure extérieure du bouchon et , d'autre part, une goupille d'arrêt (29a) traversant un logement (28a) pratiqué dans l'élément (15a, 15b) où est vissé le bouchon, ladite goupille étant susceptible de pénétrer dans une fente (24a) du bouchon.

5. Appareil selon la revendication 4, caractérisé par le fait que le dispositif de blocage comporte une pluralité de fentes (24a) et un seul logement (28a) de goupille.

6. Appareil selon la revendication 4, caractérisé par le fait que le dispositif de blocage comporte au moins une fente et une pluralité de logements de goupille.

## Claims

1. A pressure-limiting device constituted by a shell (2) comprising two intake tubes (3a, 3b) interconnected by two valves (4a, 4b), each having a shutter (7a, 7b) which is pushed against a fixed seat (9a, 9b) by means of a spring (6a, 6b), one end whereof bears on the shutter, the two valves (4a, 4b) being mounted in parallel and in opposition between the tubes in such a way that an excess pressure in the first tube (3b) causes the first valve (4a) to open, and that an excess pressure in the second tube (3a) causes the second valve (4b) to open, the opening of one or the other of the valves causing the two tubes (3a, 3b) to communicate, the excess pressures for opening the two valves (4a, 4b) being substantially equal, wherein in each valve the spring (6a, 6b) is bearing with its end, on the opposite side to that which acts on the shutter (7a, 7b), on a regulating device (5a, 5b) which allows the compression of the said spring (6a, 6b) to be modified, characterized in that the regulating device (5a, 5b) is constituted by a leakproof stopper which is displaceable in translation along the axis of the spring (6a, 6b), the said stopper making it possible to modify the compression of the said spring (6a, 6b) from the outside of the shell.

2. A device according to claim 1, characterized in that the translation of the stopper (5a, 5b) is obtained by screwing the stopper (5a, 5b) into an element (15a, 15b) of the wall of the shell (2) of the said device (1).

3. A device according to one of claims 1 or 2, characterized in that when the stopper (5a, 5b) has reached the position corresponding to the desired compression of the spring (6a, 6b), a locking device cooperates therewith to ensure that it is kept in position.

4. A device according to claim 3, characterized in that the locking device comprises, on the one hand, at least one slot (24a) arranged on the outer edge of the stopper and, on the other hand, a retaining pin (29a) passing through a recess (28a) cut in the element (15a, 15b) into which the stopper is screwed, the said pin being capable of penetrating into a slot (24a) of the stopper.

5. A device according to claim 4, characterized in that the locking device has a plurality of slots (24a) and a single recess (28a) for the pin.

6. A device according to claim 4, characterized in that the locking device has at least one slot and a plurality of recesses for the pin.

## Patentansprüche

1. Druckbegrenzungsvorrichtung (1), die von einem Gehäuse (2) gebildet wird, das zwei Einlaßstutzen (3a, 3b) aufweist, die untereinander durch zwei Ventile (4a, 4b) verbunden sind, wobei jedes eine Ventilklappe (7a, 7b) aufweist, die mittels einer Feder (6a, 6b), deren eines Ende auf der Klappe anliegt, gegen einen starren Sitz (9a, 9b) gedrückt wird, wobei die beiden Ventile (4a, 4b) parallel und gegeneinander so zwischen den Stutzen angeordnet sind, daß ein Überdruck in dem ersten Stutzen (3b) die Öffnung eines ersten Ventils (4a) hervorruft, und daß ein Überdruck in dem zweiten Stutzen (3a) die Öffnung des zweiten Ventils (4b) hervorruft, wobei die Öffnung des einen oder des anderen Ventils eine kommunizierende Verbindung zwischen den beiden Stutzen (3a, 3b) herstellt, wobei der Öffnungsüberdruck der beiden Ventile (4a, 4b) im wesentlichen gleich ist, wobei in jedem Ventil die Feder (6a, 6b) mit ihrem Ende, das demjenigen, welches auf die Klappe (7a, 7b) wirkt, gegenüberliegt, auf eine Verstelleinrichtung (5a, 5b) in Anlage kommt, die es ermöglicht, die Kompression der Feder (6a, 6b) zu verändern, dadurch gekennzeichnet, daß die Verstelleinrichtung (5a, 5b) aus einem entlang der Achse der Feder (6a, 6b) verschiebbaren Dichtungsstopfen besteht, wobei der Stopfen die Veränderung der Kompression der Feder (6a, 6b) von außerhalb des Gehäuses ermöglicht.

2. Vorrichtung gemäß Anspruch 1, dadurch gekennzeichnet, daß die Verschiebung des Stopfens (5a, 5b) durch Verschrauben des Stopfens (5a, 5b) in einem Bauteil (15a, 15b) der Wand des Gehäuses (2) der Vorrichtung (1) bewirkt wird.

3. Vorrichtung gemäß einem der Ansprüche 1 oder 2, dadurch gekennzeichnet, daß wenn der Stopfen (5a, 5b) die der gewünschten Kompression der Feder (6a, 6b) entsprechende Stellung erreicht hat, ein Blockiermittel mit ihm zusammenwirkt, um seinen Halt in dieser Stellung zu gewährleisten.

4. Vorrichtung gemäß Anspruch 3, dadurch gekennzeichnet, daß das Blockiermittel einerseits wenigstens einen in den Außenrand des Stopfens eingebrachten Schlitz (24a) und andererseits einen Fixierstift (29a) aufweist, der eine Ausnehmung (28a) durchquert, die in dem Bauteil (15a, 15b) ausgespart ist, in dem der Stopfen verschraubt ist, wobei der Stift in einen Schlitz (24a) des Stopfens eindringen kann.

5. Vorrichtung gemäß Anspruch 4, dadurch gekennzeichnet, daß das Blockiermittel mehrere Schlitze (24a) und eine einzige Stiftaufnahme (28a) aufweist.

6. Vorrichtung gemäß Anspruch 4, dadurch gekennzeichnet, daß das Blockiermittel wenigstens einen Schlitz und mehrere Stiftaufnahmen aufweist.
